Europäisches Patentamt

European Patent Office

Office européen des brevets

(19)

(11) Numéro de publication: **0 146 940**
**B1**

(12) ## FASCICULE DE BREVET EUROPEEN

(45) Date de publication du fascicule du brevet: **09.03.88**

(21) Numéro de dépôt: **84115989.0**

(22) Date de dépôt: **20.12.84**

(51) Int. Cl.⁴: **F 22 B 37/36,** F 23 J 13/04,
F 16 L 51/02

(54) Carneau metallique soumis a des gradients thermiques pour chaudiere.

(30) Priorité: **22.12.83 FR 8320578**

(43) Date de publication de la demande:
**03.07.85 Bulletin 85/27**

(45) Mention de la délivrance du brevet:
**09.03.88 Bulletin 88/10**

(84) Etats contractants désignés:
**AT BE CH DE FR GB IT LI**

(56) Documents cités:
**DE-B-1 248 060**
**DE-C- 667 144**
**FR-A-1 499 461**
**FR-A-2 230 926**
**GB-A-1 594 732**
**US-A-1 879 610**
**US-A-3 263 704**

(73) Titulaire: **STEIN INDUSTRIE Société Anonyme dite:**
**19-21, avenue Morane Saulnier**
**F-78140 Velizy Villacoublay (FR)**

(72) Inventeur: **Fournier, Jean**
**Les Petits Chaillots**
**F-78730 Rochefort en Yvelines (FR)**
Inventeur: **Patron, Henri**
**7, rue de la rabette**
**F-78730 Rochefort en Yvelines (FR)**

(74) Mandataire: **Weinmiller, Jürgen et al**
**Lennéstrasse 9 Postfach 24**
**D-8133 Feldafing (DE)**

Courier Press, Leamington Spa, England.

EP 0 146 940 B1

## Description

La présente invention concerne un carneau métallique soumis à des gradients thermiques, pour chaudière, notamment de réchauffage, vaporisation et surchauffe d'eau, ou chaudière de "récupération", comprenant plusieurs éléments superposés verticalement, munis de brides supérieure et inférieure, la bride supérieure d'un élément étant reliée à la bride inférieure de l'élément immédiatement supérieur par des tiges boulonnées.

De tels carneaux sont soumis à des gradients thermiques élevés lors des montées en température des gaz de combustion circulant à l'intérieur, ce qui provoque une déformation importante de leurs caissons. On munissait jusqu'à présent les éléments, pour les maintenir solidaires les uns des autres, de brides que l'on assujettissait entre elles par boulonnage. Les contraintes thermiques auxquelles étaient soumises ces tiges étaient telles que les boulons finissaient par se déformer plastiquement. Il n'y avait dès lors plus une étanchéité complète.

Il a été proposé dans le document FR—A— 2 230 926 une jonction de deux conduits métalliques soumis à des gradients thermiques, notamment pour relier un conduit d'échappement à un bloc moteur, comprenant deux éléments superposés munis de brides supérieure et inférieure, la bride supérieure d'un élément étant reliée à la bride inférieure de l'élément supérieur par des tiges boulonnées, et les brides en regard étant réunies sur leur pourtour par des joints métalliques élastiques et des rondelles, éventuellement élastiques, disposées entre les boulons des tiges et au moins l'une des brides. Le but d'une telle jonction est d'éviter la transmission des vibrations et de ne permettre qu'un mouvement de pivotement relatif suivant un axe perpendiculaire à la direction générale des conduits et à celle des vibrations. Cette jonction n'est applicable qu'à des conduits de fluides de diamètre relativement faible.

La présente invention a pour but de procurer un carneau pour chaudière qui conserve une étanchéité en service en dépit des contraintes thermiques auxquelles il est soumis, quelle que soit la grandeur de sa section droite et quel que soit le nombre de ses éléments.

Le carneau selon l'invention est caractérisé en ce que les brides de ses éléments sont reliées sur tout leur pourtour par des joints métalliques élastiques soudés sur leurs bords aux brides correspondantes, et en ce qu'il est disposé des rondelles et des rondelles élastiques entre les boulons des tiges et au moins l'une des brides.

De préférence, les joints métalliques élastiques sont en forme de soufflet.

Les rondelles élastiques et les boulons prennent avantageusement appui sur des plaquettes soudées sur leur arête arrière à la tôle d'un élément, et sur leurs arêtes latérales à des cloisons verticales elles-mêmes soudées aux tôles des éléments.

Il est décrit ci-après, à titre d'exemple et en référence aux figures du dessin annexé, un carneau à double caisson pour chaudière selon l'invention.

La figure 1 représente en perspective l'aspect général du double caisson.

La figure 2 représente en coupe un joint de dilatation entre les brides de deux éléments superposés.

La figure 3 représente en perspective une tige boulonnée de transmission des contraintes, avec ses rondelles élastiques.

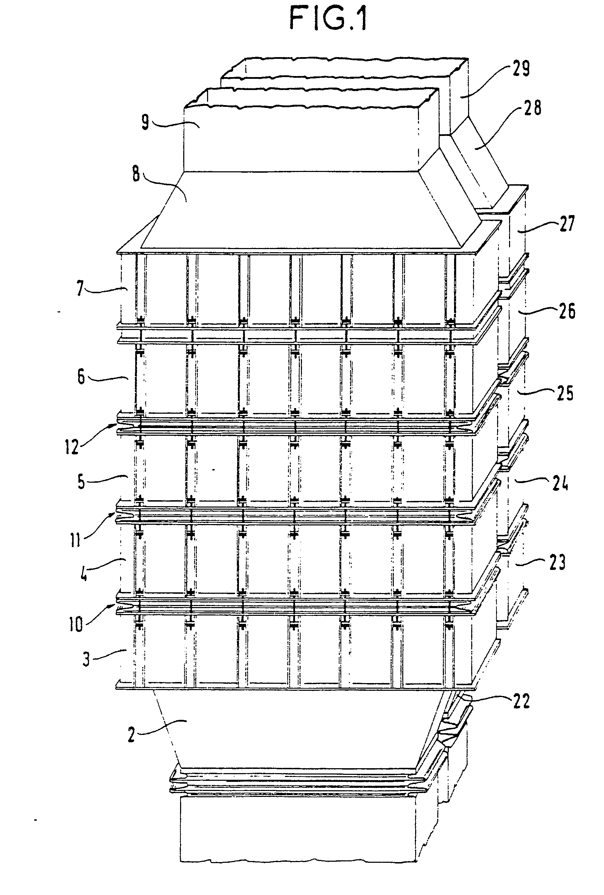

Dans la figure 1, chacun des caissons adjacents se compose d'éléments superposés 3, 4, 5, 6, 7 pour le caisson vers l'avant de la figure, 23, 24, 25, 26, 27 pour le caisson vers l'arrière de la figure. Ces éléments sont disposés entre des gaines en forme de tronc de pyramide 2, 8, pour le caisson avant, 22, 28 pour le caisson arrière. Les gaines supérieures 8, 28 sont surmontées de cheminées 9, 29.

Les jonctions entre les éléments 6, 7 et 26, 27 sont rigides et ne seront pas décrites plus en détail. Par contre, les jonctions entre les éléments 3 et 4, 4 et 5, 5 et 6, 23 et 24, 24 et 25 et 25 et 26 sont élastiques et étanches.

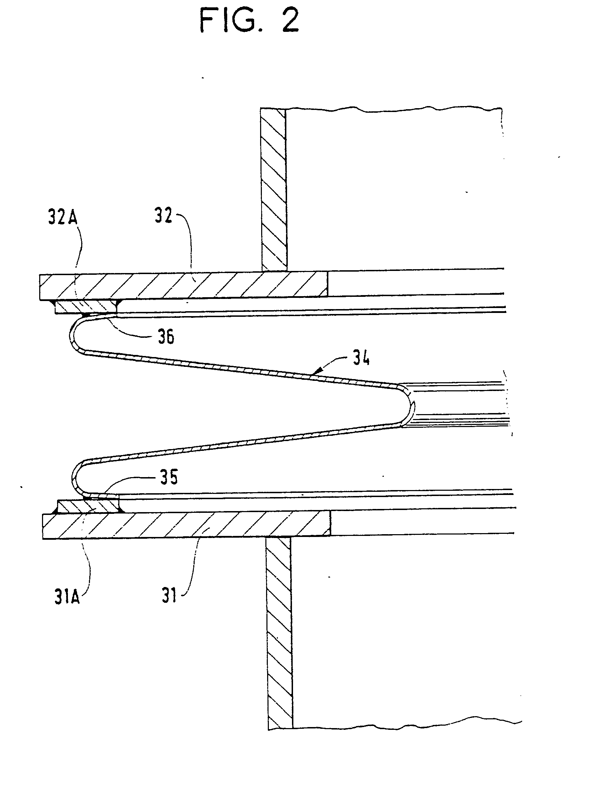

A cet effet, comme représenté en figure 2, il est soudé sur la bride supérieure 31 d'un élément un plat 31A, et sur la bride inférieure 32 de l'élément supérieur un plat 32A.

Un joint métallique en forme de soufflet 34 est soudé d'un côté par son bord inférieur 35 sur le plat 31A et de l'autre par son bord supérieur 36 sur le plat 32A.

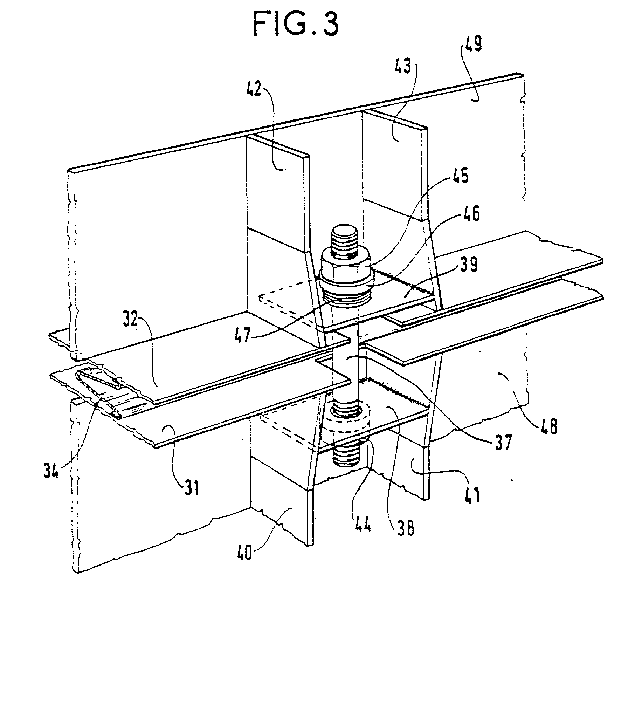

Les tiges boulonnées sont fixées aux éléments comme représenté en figure 3. La tige 37 passe à travers des encoches pratiquées dans les brides 31 et 32, et à travers des trous percés dans des plaquettes fixes 38 et 39. Ces plaquettes sont soudées, d'une part par leur bord arrière sur les tôles des caissons 48, 49, d'autre part par leurs bords latéraux deux cloisons verticales 40, 41 et 42, 43 soudées sur la tôle des caissons 48, 49.

Le boulon inférieur 44 est serré contre la plaquette 38, et le boulon supérieur 45 serre la rondelle 46 et les rondelles élastiques 47 contre la plaquette 39.

On voit que lorsque le caisson est soumis à des contraintes thermiques, les contraintes de traction verticales peuvent être absorbées par l'assemblage sur l'une des extrémités de la tige boulonnées du boulon 45, de la rondelle 46 et de la rondelle élastique 47. Les différentes tiges boulonnées assurent ainsi une bonne répartition des charges sur toute la hauteur du caisson.

## Revendications

1. Carneau métallique soumis à des gradients thermiques pour chaudière, notamment de réchauffage, vaporisation et surchauffe d'eau, comprenant plusieurs éléments superposés verticalement (3, 4, 5, 6) munis de brides supérieure et inférieure, la bride supérieure (31) d'un élément étant reliée à la bride inférieure (32) de l'élément immédiatement supérieur par des tiges boulonnées (37), caractérisé en ce que les brides en regard sont reliées sur tout leur pourtour par des joints métalliques (34) élastiques soudés sur leurs bords aux brides correspondantes, et en ce qu'il est disposé des rondelles (46) et des rondelles élastiques (47) entre les boulons (45) des tiges et au moins l'une des brides.

2. Carneau selon la revendication 1, caractérisé en ce que les joints métalliques élastiques sont en forme de soufflet (34).

3. Carneau selon les revendications 1 à 2, caractérisé en ce que les rondelles élastiques et les boulons prennent appui sur des plaquettes (38, 39) soudées sur leur arête arrière à la tôle d'un élément de caisson et sur leurs arêtes latérales à des cloisons verticales elles-mêmes soudées aux tôles des éléments de caissons.

## Patentansprüche

1. Metallischer Rauchgaskanal, der Temperaturgradienten unterworfen ist, für Kessel, insbesondere zur Wiederaufwärmung, Verdampfung und Überhitzung von Wasser, der mehrere vertikal übereinandergesetzte Elemente (3, 4, 5, 6) mit oberen und unteren Flanschen umfaßt, wobei der obere Flansch (31) eines Elements mit dem unteren Flansch des unmittelbar darüber befindlichen Elements durch Schraubbolzen (37) verbunden ist, dadurch gekennzeichnet, daß die einander gegenüberliegenden Flansche über den ganzen Umfang durch metallische, elastische Dichtungen (34) miteinander verbunden sind, welche mit ihren Rändern an den zugehörenden Flanschen verschweißt sind, und daß Unterlegringe (46) und elastische Unterlegringe zwischen den Schraubmuttern (45) der Bolzen und mindestens einem der Flansche angebracht sind.

2. Rauchgaskanal nach Anspruch 1, dadurch gekennzeichnet, daß die metallischen, elastischen Dichtungen die Gestalt von Bälgen (34) besitzen.

3. Rauchgaskanal nach den Ansprüchen 1 und 2, dadurch gekennzeichnet, daß die elastischen Unterlegringe und die Schrauben auf kleinen Stützplatten (38, 39) aufliegen, welche mit ihrem hinteren Rand an den Kästen und mit ihren Seitenrändern an vertikalen Teilungsstegen verschweißt sind, die ihrerseits an den Blechen der Kastenelemente verschweißt sind.

## Claims

1. A metallic flue for a boiler exposed to thermal gradients, especially applied to reheating, vaporisation and superheating of water, or for a recuperator, comprising a plurality of vertically superposed elements (3, 4, 5, 6,) provided with upper and lower flanges, the upper flange (31) of an element being connected to a lower flange (32) of a directly upper element by threaded bolts (37), characterized in that the adjacent flanges are connected with each other along their entire periphery by metallic, elastic seals (34) welded with their rims to the corresponding flanges, and that washers (46) and elastic washers (47) are disposed between the nuts (45) of the bolt shafts and at least one of the flanges.

2. A flue according to claim 1, characterized in that the metallic elastic seals have the shape of a bellow (34).

3. A flue according to claims 1 and 2, characterized in that the elastic washers and the nuts abut against the small platforms (38, 39) welded by their rear rims to the sheet of an element of a case, and by their lateral rims to the vertical partitions, in turn welded to the sheets of the elements of the cases.

# FIG.1

# FIG. 2

# FIG.3